# EUROPÄISCHE PATENTSCHRIFT

(11) **EP 1 240 060 B1**
(45) Veröffentlichungstag und Bekanntmachung des Hinweises auf die Patenterteilung: **07.06.2006**
(21) Anmeldenummer: 01951409.0
(22) Anmeldetag: 20.06.2001
(51) Int. Cl.: B60S 1/34, B60S 1/52, B60S 1/32

(54) **GELENKTEIL FÜR SCHEIBENWISCHER**
ARTICULATED ELEMENT FOR A WINDSCREEN WIPER
PARTIE ARTICULATION POUR ESSUIE-GLACE

(30) Priorität: 28.06.2000 DE 10031417
(43) Veröffentlichungstag der Anmeldung: 18.09.2002
(73) Patentinhaber: ROBERT BOSCH GMBH, 70442 Stuttgart (DE)
(72) Erfinder: ZIMMER, Joachim, 77880 Sasbach (DE); RAPP, Harald, 77815 Buehl (DE)
(86) Internationale Anmeldenummer: PCT/DE2001/002282
(87) Internationale Veröffentlichungsnummer: WO 2002/000480

(56) Entgegenhaltungen:
- DE-A- 3 744 237
- DE-A- 19 815 171
- DE-A- 19 904 964

## Beschreibung

### Stand der Technik

Die Erfindung geht von einem Gelenkteil für Scheibenwischer nach dem Oberbegriff des Anspruchs 1 aus.

Bekannte Scheibenwischer besitzen einen Wischarm, der aus einem Befestigungsteil und einem Gelenkteil mit einer Wischstange aufgebaut ist. Ferner weisen sie ein Wischblatt auf, das in der Regel aus einem Tragbügelsystem und einer Wischleiste besteht. Das Wischblatt ist am Wischarm angelenkt. Es wird mittels einer Zugfeder, die im Gelenkteil untergebracht ist und sich mit einem Ende am Gelenkteil und mit ihrem anderen Ende über einen C- förmigen Bügel am Befestigungsteil abstützt, gegen die Fahrzeugscheibe gedrückt. Das Gelenkteil besitzt in der Regel ein zur Fahrzeugscheibe hin offenes, U-förmiges Profil. Das offene Profil erzeugt im Fahrtwind Strömungsgeräusche.

In Verbindung mit Scheibenwischern werden in der Regel Scheibenwaschanlagen verwendet. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter über Wasserleitungen zu den Spritzdüsen fördert.

Aus der DE 198 15 171 A1 ist ein Wischarm bekannt, an dessen Gelenkteil bzw. an einer mit dem Gelenkteil einstückig verbundenen Wischstange Spritzdüsen angeordnet sind. Diese befinden sich in einem Düsenkörper, der in einer Ausbuchtung einer Seitenwand des Gelenkteils, die eine Spritzöffnung für den Spritzstrahl aufweist, untergebracht oder in einer seitlichen Halterung an der Wischstange nach unten vorstehend eingeklipst ist. Es können auch zwei Düsenkörper vorgesehen werden, die durch ein starres oder flexibles Verbindungsstück miteinander verbunden sind. Die Düsenkörper und die Schlauchverbindungen sind leicht austauschbar und gegenüber Umwelteinflüssen nur durch das sie umgebende U-Profil des Gelenkteils bzw. des Befestigungsteils geschützt.

Aus der DE 37 44237 A1 ist ferner ein Führungselement für ein Wischblatt vorgesehen, das am Wischarm befestigt ist und wenigstens eine Führungswange aufweist, an der das Wischblatt während der Schwenkbewegung anliegt. Das Führungselement verhindert, dass das Wischblatt bei einem Wischvorgang und unter ungünstigen Bedingungen auf der Fahrzeugscheibe rattert. Es kann unterschiedliche äußere Formen aufweisen, so dass es bei vielen Wischeranlagen eingesetzt werden kann. Zudem sehen Ausgestaltungen vor, dass weitere Bauteile, wie Waschdüsen oder Windleitschaufeln, im Führungselement integriert sind. Da die Führungselemente als einzelne Bauteile montiert werden, besteht der Nachteil einer großen Teilevielfalt. Ferner ergeben die am Wischarm montierten Führungselemente ungünstige Strömungsprofile, die im Fahrtwind Geräusche verursachen und optisch störend wirken.

### Vorteile der Erfindung

Nach der Erfindung ist an der offenen Seite eines U-förmigen Gelenkteilprofils eine multifunktionale Platte eingesetzt und mit Teilen des Gelenkteils verrastet. Die Platte vereinigt mehrere Teilfunktionen in einem Bauteil, wie z.B. eine Spritzdüsenbefestigung, Schlauchfixierung, Wischblattführung oder aerodynamisches Hilfsmittel. Sie erleichtert den Zusammenbau des Gelenkteils, indem zunächst die Einzelelemente auf der Platte vormontiert und justiert und danach in das Profil eingesetzt werden. Mit wenig Aufwand können Varianten mit unterschiedlichen Funktionen für verschiedene Anwendungen hergestellt werden, wobei im Wesentlichen nur die Platte angepasst zu werden braucht, während sich eine große Anzahl von gleichen Teilen ergibt. Dies führt zu geringeren Stückkosten, insbesondere durch geringere Werkzeugkosten, weil weniger spezielle Einzelwerkzeuge benötigt werden.

Die multifunktionale Platte weist gemäß einer Ausgestaltung der Erfindung in der Nähe einer Spritzöffnung in einer Seitenwand des Gelenkteils mindestens eine Stecköffnung für eine Spritzdüse auf, wobei die zu montierende Spritzdüse und/oder die Platte in der Nähe der Spritzöffnung zur Befestigung Rastfedern besitzen. Zweckmäßigerweise wird die Spritzdüse auf einfache Weise vormontiert und durch das Ausrichten an einer Anlagefläche in ihrer endgültigen Position fixiert, so dass ein Nachjustieren am montierten Scheibenwischer entfallen kann.

Ferner weist die multifunktionale Platte Schottwände auf, die in das U-förmige Profil hinein ragen und in Längsrichtung einen Abstand zueinander besitzen. Die Schottwände haben Aussparungen, durch die mindestens ein Wasserschlauch einer Scheibenwaschanlage geführt werden kann. Im Bereich zwischen dem Abklappgelenk und einer Schottwand ist zusätzlich eine Schlauchfixierung vorgesehen. Da somit der Wasserschlauch mehrfach fixiert ist und daher nicht durchhängt, verklemmt er nicht zwischen anderen Bauteilen, so dass er nicht beschädigt wird und die Funktion der Waschanlage stets gesichert ist.

Der Wasserschlauch und die Zugfeder, welche das Gelenkteil mit dem Befestigungsteil verspannt, sind auf der Platte vormontiert. In der Vormontage können so unterschiedliche Einheiten für verschiedene Fahrzeugtypen vorbereitet werden, die in der Gelenkteilmontage des Scheibenwischers mit dem jeweiligen U-förmigen Profil des Gelenkteils zusammengefügt werden. Da die Anzahl der Bauteile während der Gelenkteilmontage wesentlich geringer ist, vereinfacht sich die Montage und die Fertigungszeiten sind kürzer. Gleichzeitig wird die Gefahr von Fehlmontagen eingeschränkt.

Vorzugsweise ist die multifunktionale Platte aus Kunststoff gefertigt. Um Klappergeräusche zu vermeiden, ist die Platte unter einer Vorspannung in das u-förmige Profil des Gelenkteils eingesetzt, wobei sie an den Seitenwänden verrastet. Die Vorspannung kann durch leichte Schrägstellung der Anlageflächen oder durch elastische, federnde Bereiche gebildet werden. Sie kann alternativ oder zusätzlich an einem Gelenkstift oder an der Zugfedereinhängung verrastet werden.

Ein verblendetes Gelenkteil stellt eine nach außen kompakte Einheit dar, die wenig Geräusche verursacht, wenn sie vom Fahrtwind umströmt wird. Bei geeigneter Ausführung kann sogar die Leistung des Wischarmantriebs reduziert werden. Ferner ist auch die Optik des Scheibenwischers verbessert und die flexiblen Schlauchverbindungen werden zusätzlich vor Umwelteinflüssen geschützt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines Gelenkteils von unten gesehen,
- Fig. 2: eine perspektivische Darstellung einer multifunktionalen Platte,
- Fig. 3: eine Spritzdüse,
- Fig. 4: eine perspektivische Darstellung der multifunktionalen Platte mit vormontierten Bauteilen,
- Fig. 5: einen Schnitt gemäß einer Linie V-V in Fig. 4,
- Fig. 6: einen Schnitt gemäß einer Linie VI-VI in Fig. 4 und
- Fig. 7: einen Schnitt gemäß einer Linie VII-VII in Fig.4.

### Beschreibung des Ausführungsbeispiels

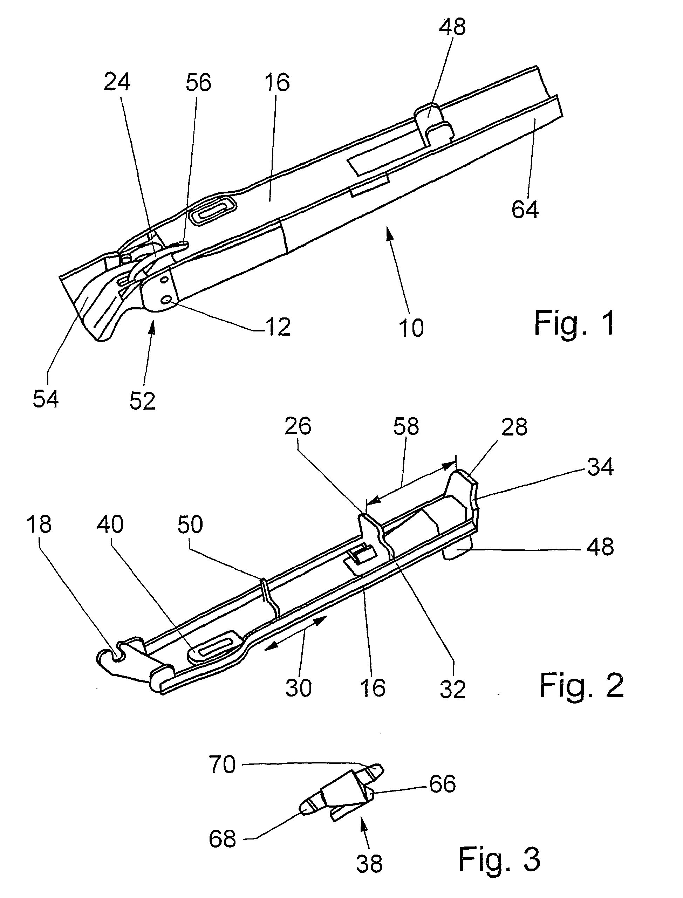

Ein Gelenkteil 10 weist im Querschnitt ein U-förmiges Profil 64 auf, das zu einer hier nicht dargestellten Fahrzeugscheibe hin offen ist (Fig. 1). Es ist über ein Abklappgelenk 52 mit einem Gelenkstift 12 mit einem Befestigungsteil 54 verbunden. Das Gelenkteil 10 ist an der offenen Seite des Profils 64 durch eine multifunktionale Platte 16 abgedeckt. Die Platte 16 ist vorzugsweise aus Kunststoff hergestellt und besitzt an ihrer unteren, zur Fahrzeugscheibe weisenden Seite zwei angeformte Führungsflächen 48, zwischen denen ein Wischblatt des Scheibenwischers geführt wird. Die Führungsflächen 48 liegen zweckmäßigerweise an dem Ende der Platte 16, das dem Abklappgelenk 52 abgewandt ist.

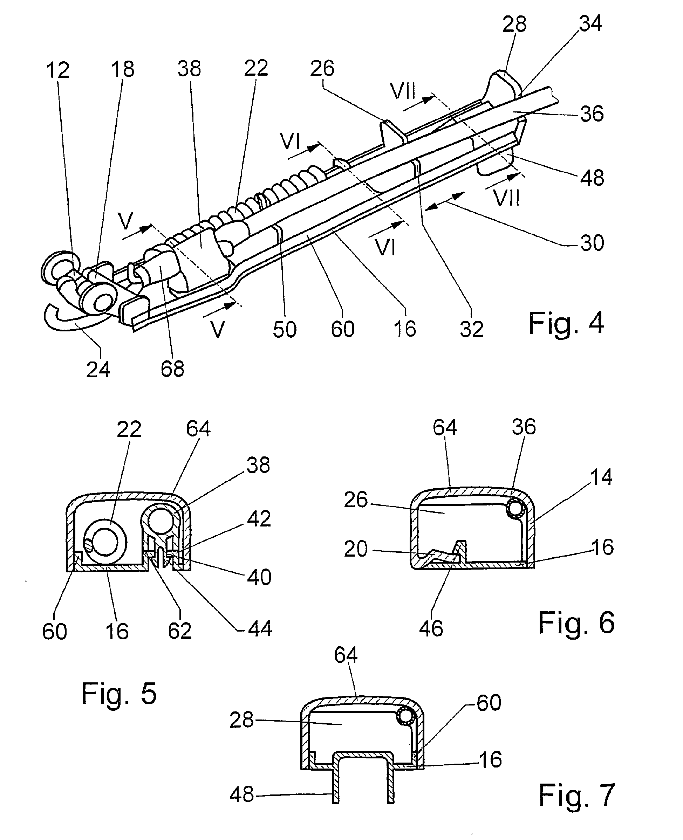

Zum Inneren des Profils 64 ist auf der Platte 16 eine Zugfeder 22 montiert, die mit einem Ende in eine als Lasche oder Stift ausgebildete Zugfedereinhängung 20 an dem Gelenkteil 10 und mit ihrem anderen Ende in einem C-Bügel 24 eingehängt ist. Der C-Bügel 24 greift durch eine Aussparung 56 der Platte 16 und stützt sich am Befestigungsteil 54 ab. Neben der Zugfeder 22 ist auf der Platte 16 eine Spritzdüse 38 montiert (Fig. 4). Sie besitzt eine Rastfeder 44, die in eine Stecköffnung 40 in der Platte 16 einrastet. Der Rand der Stecköffnung 40 ist zweckmäßigerweise ebenfalls als Rastfeder 42 ausgebildet. In der Regel reicht es aus, wenn nur eine Rastfeder 42 oder 44 vorgesehen ist. Die Spritzdüse 38 ist so auf einer Anlagefläche 62 der Platte 16 montiert, dass ihr Spritzloch 66 auf eine nicht näher dargestellte Spritzöffnung in der Seitenwand 14 des Profils 64 gerichtet ist. Sie wird bei der Montage in ihrer endgültigen Position fixiert, so das sich ein nachjustieren bei der Endmontage weitgehend erübrigt. Die Spritzdüse 38 besitzt zwei Anschlüsse 68, 70 für Wasserschläuche 36, von denen der eine Anschluss 68 zu einer nicht näher dargestellten Wasserversorgung führt, während der andere Anschluss 70 eine Verbindung zu weiteren nicht dargestellten Spritzdüsen führt.

Zum Abstützen des Wasserschlauchs 36 sind an der Platte 16 Schottwände 26, 28 und eine Schlauchfixierung 50 angeordnet. Die Schottwände besitzen Aussparungen 32, 34, durch die der Wasserschlauch 36 verlegt und in denen er gehalten ist. Die Schottwände 26 und 28 sind in Längsrichtung 30 der Platte 16 in einem Abstand 58 zueinander angeordnet. Durch die gute Fixierung und Abstützung des Wasserschlauchs 36 werden Klappergeräusche vermieden. Außerdem kann der Wasserschlauch 36 nicht durchhängen und sich mit benachbarten Bauteilen verklemmen, so das die Funktion der Waschanlage stets gewährleistet ist.

Die Platte 16 wird von der offenen Seite in das Profil 64 eingesetzt und verrastet. Hierzu dienen seitliche Stege 60 die elastisch mit den Seitenwänden 14 des Profils 64 verrasten. Zusätzlich oder alternativ zu den Stegen 60 besitzt die Platte 16 im Bereich des Abklappgelenks 52 ein Rastauge 18, das mit dem Gelenkstift 12 verrastet, und im Bereich der Federeinhängung 20 einen Rasthaken 46, der mit der Federeinhängung 20 verrastet. Die vormontierte Platte 16 (Fig. 4) kann so mit wenigen Handgriffen in das Profil 64 eingesetzt werden.

## Patentansprüche

1. Gelenkteil (10) für Scheibenwischer mit einem im Querschnitt U-förmigen Profil (64), **dadurch gekennzeichnet, dass** an der offenen Seite in das Profil (64) eine multifunktionale Platte (16) eingesetzt ist, die mehrere Teilfunktionen in einem Bauteil vereinigt, wie z.B. eine Befestigung (42) für eine Spritzdüse (38), eine Schlauchfixierung (50), eine Wischblattführung oder aerodynamische Hilfsmittel, und mit Teilen (12, 14, 20) des Gelenkteils (10) verrastet ist.

2. Gelenkteil (10) nach Anspruch 1, **dadurch gekennzeichnet, dass** die Platte (16) an Seitenwänden (14) des U-förmigen Profils (64) verrastet ist.

3. Gelenkteil (10) nach einem der vorhergehenden Ansprüche, **dadurch gekennzeichnet, dass** die Platte (16) an einem Gelenkstift (12) verrastet ist.

4. Gelenkteil (10) nach einem der vorhergehenden Ansprüche, **dadurch gekennzeichnet, dass** die Platte (16) an einer Zugfedereinhängung (20) verrastet ist.

5. Gelenkteil (10) nach einem der vorhergehenden Ansprüche, **dadurch gekennzeichnet, dass** an der Platte (16) Schottwände (26, 28) vorgesehen sind, die in Längsrichtung (30) einen Abstand (58) zueinander aufweisen und Aussparungen (34) haben, um mindestens einen Wasserschlauch (36) einer Scheibenwaschanlage zu fixieren.

6. Gelenkteil (10) nach einem der vorhergehenden Ansprüche, **dadurch gekennzeichnet, dass** die Platte (16) in der Nähe einer Spritzöffnung in einer Seitenwand (14) des Profils (64) mindestens eine Stecköffnung (40) für eine Spritzdüse (38) aufweist.

7. Gelenkteil (10) nach einem der vorhergehenden Ansprüche, **dadurch gekennzeichnet, dass** die Spritzdüse (38) und/oder die Platte (16) in der Nähe einer Spritzöffnung in einer Seitenwand (14) des Profils (64) Rastfedern (42, 44) aufweist.

8. Gelenkteil (10) nach Anspruch 6 oder 7, **dadurch gekennzeichnet, dass** die Spritzdüse (38) bei der Montage in ihrer endgültigen Position fixiert wird.

9. Gelenkteil (10) nach einem der vorhergehenden Ansprüche, **dadurch gekennzeichnet, dass** die Platte (16) mindestens eine Führungsfläche (48) für ein Wischblatt aufweist.

10. Gelenkteil (10) nach einem der vorhergehenden Ansprüche, **dadurch gekennzeichnet, dass** die Platte (16) aus Kunststoff gefertigt ist.

11. Gelenkteil (10) nach Anspruch 10, **dadurch gekennzeichnet, dass** die Platte (16) unter einer Vorspannung in das Profil (64) eingesetzt ist.

## Claims

1. Articulated element (10) for windscreen wipers, having a U-shaped profile (64) in cross section, **characterized in that** a multifunctional plate (16) is inserted into the profile (64) on the open side, the said plate combining a plurality of subfunctions in one component, such as, for example, a fastening (42) for a spray nozzle (38), a tube-fixing means (50), a wiper blade guide or aerodynamic auxiliary means, and being latched to parts (12, 14, 20) of the articulated element (10).

2. Articulated element (10) according to Claim 1, **characterized in that** the plate (16) is latched to side walls (14) of the U-shaped profile (64).

3. Articulated element (10) according to one of the preceding claims, **characterized in that** the plate (16) is latched to a hinge pin (12).

4. Articulated element (10) according to one of the preceding claims, **characterized in that** the plate (16) is latched to a tension spring fitting (20).

5. Articulated element (10) according to one of the preceding claims, **characterized in that** partition walls (26, 28) are provided on the plate (16), the said partition walls being at a distance (58) from each other in the longitudinal direction (30) and having cutouts (34) in order to fix at least one water tube (36) of a windscreen washer system.

6. Articulated element (10) according to one of the preceding claims, **characterized in that** the plate (16) has at least one plug-in opening (40) for a spray nozzle (38) in the vicinity of a spray opening in a side wall (14) of the profile (64).

7. Articulated element (10) according to one of the preceding claims, **characterized in that** the spray nozzle (38) and/or the plate (16) have latching springs (42, 44) in the vicinity of a spray opening in a side wall (14) of the profile (64).

8. Articulated element (10) according to Claim 6 or 7, **characterized in that** the spray nozzle (38) is fixed in its final position during installation.

9. Articulated element (10) according to one of the preceding claims, **characterized in that** the plate (16) has at least one guide surface (48) for a wiper blade.

10. Articulated element (10) according to one of the preceding claims, **characterized in that** the plate (16) is manufactured from plastic.

11. Articulated part (10) according to Claim 10, **characterized in that** the plate (16) is inserted under prestress into the profile (64).

## Revendications

1. Pièce d'articulation (10) d'essuie-glace ayant un profil (64) à section en forme de U,
**caractérisée en ce que**
le côté ouvert du profil (64) reçoit une plaque multifonctions (16) qui réunit plusieurs fonctions partielles en une seule pièce comme par exemple la fixation (42) d'une buse de pulvérisation (38), une fixation de tuyau (50), un guidage de lame d'essuie-glace ou un accessoire aérodynamique, ces éléments étant verrouillés à des parties (12, 14, 20) de la pièce d'articulation (10).

2. Pièce d'articulation (10) selon la revendication 1,
**caractérisée en ce que**
la plaque (16) est accrochée aux parois latérales (14) du profil (64) en forme de U.

3. Pièce d'articulation (10) selon l'une des revendications précédentes,
**caractérisée en ce que**
la plaque (16) est accrochée à une broche d'articulation (12).

4. Pièce d'articulation (10) selon l'une des revendications précédentes,
**caractérisée en ce que**
la plaque (16) est accrochée à une suspension de ressort de traction (20).

5. Pièce d'articulation (10) selon l'une des revendications précédentes,
**caractérisée en ce que**
la plaque (16) comporte des parois de cloisonnement (26, 28) écartées de la distance (58) dans la direction longitudinale (30) et ayant des découpes (34) pour permettre de bloquer au moins le tuyau d'alimentation en eau (36) d'une installation d'essuie-glace.

6. Pièce d'articulation (10) selon l'une des revendications précédentes,
**caractérisée en ce que**
la plaque (16) comporte à proximité d'un orifice d'éjection, dans une paroi latérale (14) du profil (64), au moins un orifice d'enfichage (40) pour une buse de projection (38).

7. Pièce d'articulation (10) selon l'une des revendications précédentes,
**caractérisée en ce que**
la buse de projection (38) et/ou la plaque (16) ont des ressorts d'accrochage (42, 44) à proximité d'un orifice d'éjection dans une paroi latérale (14) du profil (64).

8. Pièce d'articulation (10) selon les revendications 6 ou 7,
**caractérisée en ce que**
la buse de projection (38) est bloquée au montage dans sa position définitive.

9. Pièce d'articulation (10) selon l'une des revendications précédentes,
**caractérisée en ce que**
la plaque (16) comporte au moins une surface de guidage (48) pour une lame d'essuie-glace.

10. Pièce d'articulation (10) selon l'une des revendications précédentes,
**caractérisée en ce que**
la plaque (16) est fabriquée en matière plastique.

11. Pièce d'articulation (10) selon la revendication 10,
**caractérisée en ce que**
la plaque (16) est intégrée au profil (64) sous une précontrainte.
